# EUROPEAN PATENT APPLICATION

(11) **EP 3 754 567 A1**
(43) Date of publication of application: **23.12.2020**
(21) Application number: 20180422.6
(22) Date of filing: 17.06.2020
(51) Int. Cl.: G06N 20/00, D04B 1/00, D04B 37/02

(54) **A METHOD FOR DETERMINING SUITABLE KNITTING CONDITIONS OR THE FEASIBILITY OF KNITTING BY A COMPUTER USING A MACHINE LEARNING DEVICE AND A PROCESSING SYSTEM THEREFOR**

(30) Priority: 18.06.2019 JP 2019112503
(71) Applicant: SHIMA SEIKI MFG., LTD., Wakayama 641-8511 (JP)
(72) Inventor: TERAI, Koichi, Wakayama, 641-8511 (JP); YASUDA, Kazuki, Wakayama, 641-8511 (JP); MORIKI, Hironori, Wakayama, 641-8511 (JP); WAKIMURA, Kazuhiro, Wakayama, 641-8511 (JP)
(74) Representative: Wimmer, Hubert

(57) **Abstract**

For discriminating the feasibility of knitting by a knitting machine or for predicting suitable knitting conditions, a trained machine learning device is used. The machine learning device has explanatory variables comprising yarn property values and driving data of the knitting machine, and objective variables comprising feasibility of knitting by the knitting machine or feasible knitting conditions. The machine learning device outputs the feasibility of knitting by the knitting machine or the feasible knitting conditions from the machine learning device, in response to input of the yarn property values and the driving data of the knitting machine.

## Description

### Field of the Invention

The present invention relates to the processing of driving data of a knitting machine, such as a flat knitting machine, by machine learning.

### Background Art

The feasibility of knitting by a knitting machine and the suitable knitting conditions depend upon yarn property values (parameters representing yarn characteristics). For example, even when the same kind of yarns is used, the yarn property values change by dyeing, and generally, yarns become stiffer when a larger quantity of dye is used. Further, black dyes often make yarns stiffer than other color dyes. Yarn property values depend upon temperature and humidity; for example, knitted fabrics that can be knitted without trouble in a humid environment may cause trouble in a dry environment. Due to these situations, it needs actual confirmation to confirm whether the same knitting conditions may be applied, when knitting in Japan, and when knitting outside of Japan. Further, the yarn property values of the same type yarns are sometimes different between one produced in last year and one produced in this year. Yarn property values may gradually change due to subtle differences in the yarn materials, the slight difference in the production conditions, the difference in storage period, and so on.

Knitting yarns change, as every year, due to changes in materials and improvements in spinning technology and dyeing technology. The designs of knitted fabrics change similarly. Then, it is not certain whether knitting conditions used for yarn in last year may be applied to yarn in this season.

It has been supposed that the factors that influence yarn property values are the materials of yarn (wool, cotton, chemical fiber, and other types of fibers), the weight of yarn per length (yarn count), twist number (the number of twist of yarn per length), and so on. However, it is difficult to predict adequate knitting conditions according to these factors. Furthermore, it is not certain whether yarn property values can be predicted based upon the materials, the yarn counts, the twist numbers, and so on. For example, the influence of temperature and humidity, the influence of dyeing, the changes in yarn property values between seasons, and so on, are difficult to be explained by the material, the yarn count, and the twist number of yarns.

Consequently, everywhen yarn changes in some aspects, test-knitting of a fabric on a knitting machine is necessary. By a test-knitting, it is confirmed whether a knitted fabric with the aimed quality is knitted, and various data, such as stitch density (the size of stitches), knitting speed of the knitted fabric, and the take-down conditions of the knitted fabric, are to be confirmed during the test-knitting. It is inefficient to perform test-knitting frequently.

Relevant pieces of prior art are introduced. According to Patent Document 1 (WO 2009/34910), defect data of knitted fabrics are stored in a table of a computer, and the movement of needle beds and carriers in a knitting machine is simulated in order to detect plausible defects. Patent Document 1 allows to detect defects in knitting data, but the computer does not learn. Namely, the defect data in Patent Document 1 are fixed data written in the table, and the defect data are not automatically learned.

According to Patent Document 2 (US 2017/0273383), apparel patterns are generated by machine learning or regression analysis ([0034], [0036]). However, Patent Document 2 does not disclose to optimize knitting data according to yarn property values nor to discern whether knitting is feasible.

### Prior Publication

### Patent Document

Patent Document 1: WO 2009/34910
Patent Document 2: US 2017/0273383

### Summary of the Invention

### Problem to be Solved by the Invention

The object of the invention is to discriminate by machine learning whether a knitted fabric can be feasibly knitted or to predict by machine learning adequate knitting conditions in the knitting machine.

### Means for Solving the problem

A processing method according to the invention of driving data of a knitting machine uses a trained machine learning device that has explanatory variables comprising yarn property values and driving data of the knitting machine, and objective variables comprising feasibility of knitting by the knitting machine or feasible knitting conditions. The method comprises:
a step for inputting the yarn property values and the driving data of the knitting machine into the machine learning device as the explanatory variables; and
a step for outputting, from the machine learning device, the feasibility of knitting by the knitting machine or the feasible knitting conditions.

A processing system of driving data, according to the invention, of a knitting machine comprises a trained machine learning device that has explanatory variables comprising yarn property values and driving data of the knitting machine, and objective variables comprising feasibility of knitting by the knitting machine or feasible knitting conditions.

The machine learning device is configured to output the feasibility of knitting by the knitting machine or the feasible knitting conditions, in response to input of the yarn property values and the driving data of the knitting machine.

According to the invention, the feasibility of knitting by a knitting machine is discriminated by machine learning, or the adequate knitting conditions in the knitting machine are predicted by machine learning. Hence test-knitting for a new type of yarn can be made unnecessary or the number of the test-knitting can be reduced. Further, the lead-time till the actual knitting can be shortened when a new type of yarn is used.

Preferably, the driving data of the knitting machine are inputted into a front-end processor, the front-end processor transforms the inputted driving data of the knitting machine to transformed driving data for the machine learning device, and the front-end processor inputs the transformed driving data into the machine learning device. As a result, the machine learning device is not necessary to transform the driving data to the necessary data for the machine learning system.

Preferably, the explanatory variables include the yarn property values at a temperature and a humidity in an environment where the knitting machine is provided. More preferably, the explanatory variables consist of the yarn property values at a temperature and a humidity in an environment where the knitting machine is provided and the driving data of the knitting machine. The yarn property values depend upon ambient temperature and humidity where the knitting machine is installed. Note that the yarn property values at the temperature and the humidity in the atmosphere where the knitting machine is present are the actual yarn property values when knitting. Then, if the above yarn property values are made the explanatory variables, the influence of temperature and humidity becomes very small. Here, the atmosphere where the knitting machine is provided means one within a building where the knitting machine is provided or those similar to that.

Preferably, the explanatory variables do not include the kind of the yarn material. If the yarn property values are excluded from the explanatory variables, it becomes not necessary to collect plural sets of training data for respective kinds of yarn. Therefore, the machine learning device can be trained more rapidly.

Preferably, plural kinds of objective variables are dealt with, a plurality of machine learning devices are used according to the kinds of the objective variables, and each machine learning device outputs the feasibility of knitting by the knitting machine or the feasible knitting conditions with respect to each objective variables. The knitting conditions in the knitting machine as the objective variables include various factors such as the knitting speed, the take-down conditions, the stitch size, the tension applied to the yarn. It is difficult for one machine learning device to process all the factors. If the plural machine learning devices for respective objective variables are provided and trained, then, the necessary knitting conditions can be processed simply.

Preferably, the yarn property values include at least yarn width, tensile strength when the yarn is ruptured, and elongation ratio when tension is applied to the yarn. More preferably, the yarn property values include further the frictional coefficient of the yarn. The inventors have confirmed that the difference in the yarn property values can be explained at least by the yarn width, the tensile strength when the yarn is broken, the elongation ratio when tension is applied to the yarn, and the frictional coefficient of the yarn. In particular, the yarn width, the tensile strength when the yarn is broken, and the elongation ratio when tension is applied to the yarn are the major factors.

Preferably, the results when a knitted fabric is knitted by the knitting machine according to the feasibility of knitting by the knitting machine or the feasible knitting conditions outputted from the machine learning device are additionally learned by the machine learning device. When the machine learning device is re-trained by the output of the machine learning device and the knitting results by the output, the machine learning device learns deeper.

Preferably, the objective variables include the lower limit of stitch size that can be feasibly knitted or the feasibility of knitting at a designated stitch size, and the machine learning device is configured to output an adequate range of stitch size or the feasibility of knitting at the designated stitch size, in accordance with the type of the stitches. The lower limit of stitch size that can be feasibly knitted is presumably determinable upon the yarn property values and the type of stitches (the structure of the knitted fabric). Therefore, when the lower limit of stitch size feasibly knitted is determined by the machine learning, it becomes not necessary to repeat the test-knitting to find the lower limit when a new type of yarn is to be used. By the way, according to the experiences of the inventors, the upper limit of stitch size is determined based upon the stitch cams and so on in the knitting machine and is not fitted to machine learning. However, if the upper limit of stitch size can be determined by the yarn property values and stitch types and so on, not upon the mechanism of the knitting machine, the upper limit of the stitch size can be predictable by machine learning.

Preferably, the objective variables include suitable knitting speed or the feasibility of knitting at a designated knitting speed, for each knitting course. When the knitting speed is increased, the productivity of knitted fabrics is also increased, but defects such as the yarn break and unevenness in the stitch size, appear more often. Therefore, if the adequate knitting speed is predictable by machine learning, knitted fabrics with desired quality can be knitted efficiently.

Preferably, the objective variables include a suitable take-down condition or the feasibility of knitting at a designated take-down condition, for each knitting course. For example, during flechage knitting, stitches formed several courses ago are held on the needle beds, it becomes difficult to take down the knitted fabric adequately. Further, twisted stitches are difficult to be knocked off from needles. When stitches are taken off from the needle beds by binding-off, the stitch rows not held by the needle beds are taken down. Thus, if the adequate take-down conditions are predictable by machine learning, it is not necessary to repeat test-knitting for the determination of the adequate take-down conditions.

The types of the objective variables to be processed by the machine learning device is arbitrary. The types of the machine learning devices are arbitrary, but those using teacher data are preferable.

### Brief Description of the Drawings

Fig. 1 is a block diagram of a machine learning system according to an embodiment.
Fig. 2 is a block diagram of a flat knitting machine having the machine learning system according to the embodiment.
Fig. 3 is a view indicating another environment for the machine learning system according to the embodiment.
Fig. 4 is a schematic diagram revealing how to measure the frictional coefficients of yarn.
Fig. 5 is a schematic diagram revealing how to measure the width of yarn.
Fig. 6 is a schematic diagram revealing how to measure the tensile strength and elongation ratio of yarn.
Fig. 7 is a block diagram of a multi-regression analyzer for predicting the lower limit of stitch size that can be knitted.
Fig. 8 is a block diagram of a multi-regression analyzer for predicting adequate knitting speed.
Fig. 9 is a block diagram of a neural network for predicting adequate take-down conditions for knitted fabrics.
Fig. 10 is a block diagram of a neural network according to a modification.
Fig. 11 is a view indicating schematically discrimination by the k-nearest neighbor algorithm.

### Features for Carrying out the Invention

The best embodiment for carrying out the invention will be described. Embodiment

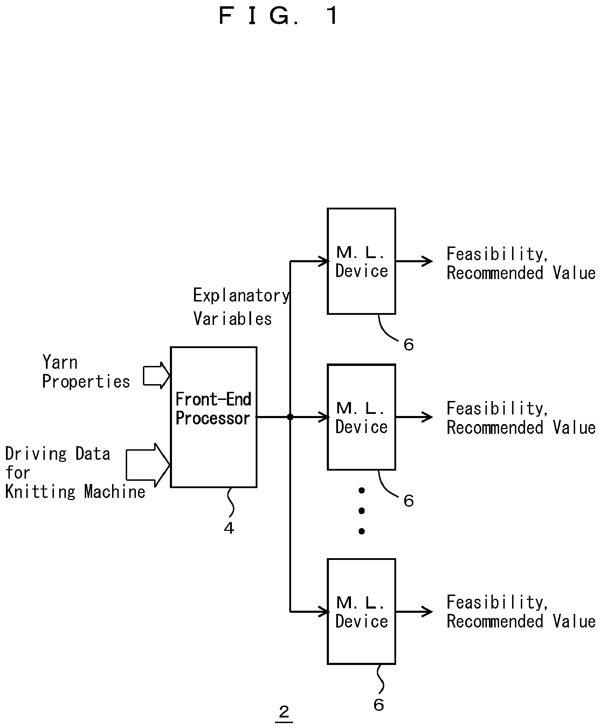

Figs. 1 to 11 indicate the embodiment and modifications. Fig. 1 indicates the machine learning system 2. In Fig. 1, a front-end processor 4 extracts necessary data for individual machine learning devices 6 from input data such as yarn property values and driving data of a knitting machine or combines elements in these input data and inputs them, as explanatory variables, into the individual machine learning devices 6. The individual machine learning devices 6 are already trained, and it is preferable to provide individual machine learning devices 6 corresponding to individual factors about knitting, such as the suitable range of stitch size to be knitted, adequate knitting speed, and adequate take-down conditions. It is simpler to process the factors separately than to process all factors by one machine learning device 6. In addition, the front-end processor 4 and the machine learning devices 6 are not necessarily to be present independently; for example, they may be realized in one computer by software, or they may be realized over plural computers.

The machine learning devices 6 are, for example, a multi-variable analyzer such as a multi-regression analyzer, or a discrimination analyzer, a neural net, one according to the k-nearest neighbor algorithm that considers the sets of the explanatory variables as points in a phase space and discerns according to teacher data in the neighborhood. The types of the machine learning devices 6 are arbitrary.

The yarn property values (they may be simply referred to as "yarn properties.") preferably include the yarn width, the tension applied to the yarn when the yarn is broken (tensile strength), elongation ratio when tension is applied to the yarn, and frictional coefficient of the yarn and include at least the yarn width, the tensile strength, and the elongation ratio. The elongation ratio may be measured before the yarn is broken or it may be the elongation ratio from a state without tension till the yarn is broken.

In addition to the above, the bending stiffness of yarn, the wear resistance of yarn, the twist number of yarn, or the like, may be included in the yarn property values. However, according to the experiences of the inventors, the bending stiffness and the wear resistance of yarn have a correlation to the yarn width; the tensile strength; the elongation ratio; and the frictional coefficient of yarn. They may be considered as the dependent variables rather than the independent variables. Further, the twist number of yarn has only an small influence to the feasibility of knitting and also to the suitable knitting conditions. Hence the bending stiffness, the wear resistance, and the twist number of yarn may be included or not included in the explanatory variables.

yarn property values change according to ambient temperature and humidity. According to one approach to this, yarn property values at a standard temperature and under a standard humidity are to be used, and corrections are added in order to compensate for the differences in the temperature and in the humidity. However, if the yarn property values at the temperature and under the humidity in the actual environment where knitting is performed are used, such corrections are not needed. Further, since the yarn property values in the real knitting environment are more important than those in a standard environment, the explanatory variables are preferably the yarn property values at the temperature and under the humidity in the real knitting environment. The real knitting environment means, for example, one in a building where knitting machines are installed.

As traditional indicators of yarn property values, the material of the yarn and the yarn count have been used. When the yarn material is included in the explanatory variables, sometimes, the feasibility of knitting and suitable knitting conditions are more accurately predictable. However, in most cases, without the yarn material, the feasibility of knitting and the suitable knitting conditions have been reliably predicted. Hence the yarn material may not be included in the explanatory variables. In addition, when the yarn material is included in explanatory variables, more data are necessary to be learned. For example, when the yarn material is classified into the three types of cotton, wool, and chemical fibers, the necessary data to be learned become about threefold.

The driving data of a knitting machine refers to data relevant to the operation of the knitting machine. Into a front-end processor 4, a wide range of the driving data, such as knitting data, knitting speed (the speed that a carriage knits a knitted fabric.), the tension to yarn when the yarn is fed from a yarn feeding system, are inputted. The front-end processor 4 extracts necessary data or generates the necessary data as the combination of the input data, for respective machine learning devices 6.

The objective variables are the feasibility of knitting, the suitable knitting conditions, the upper and lower limits of the range where knitting is feasible, and so on. The feasibility of knitting, the suitable knitting conditions, and so on, are dependent upon the kind of the knitting machine. As a result, it is preferable that the machine learning system 2 is trained for a specific kind of knitting machines or separately for a variety of types of knitting machines. Here, if the same explanatory variables will yield the same objective variables, such as the feasibility of knitting and the suitable knitting conditions, with respect to different knitting machines, they are the same type of knitting machines. In the embodiment, flat knitting machines are described, as the example of knitting machines; however, they may be circular knitting machines or the like.

As the objective variables, the lower limit of stitch size that can be feasibly knitted, suitable knitting speed, suitable take-down conditions are considered in the embodiment, and their values are determined by machine learning. In addition to them, the suitable tension value applied to yarn by a yarn feeding system may be predictable, and the discrimination whether a knitted fabric having the desired quality may be knitted and so on can be performed.

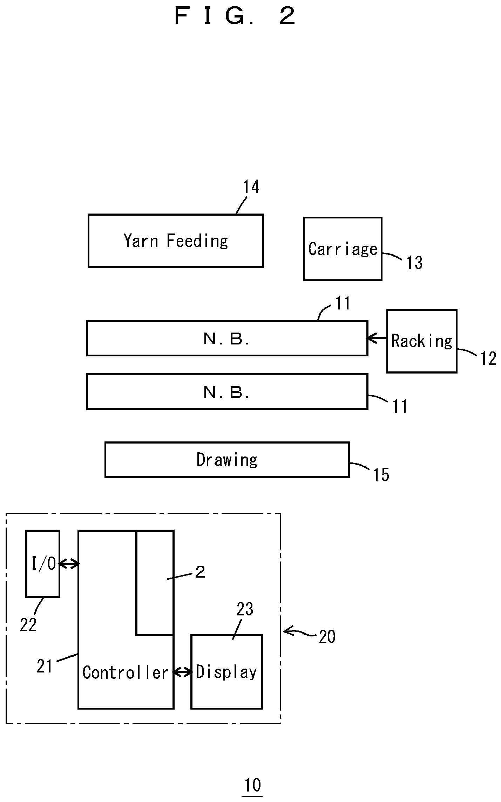

Fig. 2 indicates a flat knitting machine 10 where the machine learning system 2 is integrated into the controller 20 of the knitting machine 10. The flat knitting machine 10 is provided with plural needle beds 11, and at least one of the needle beds 11 is configured to rack by a racking device 12. A carriage 13 manipulates needles in the needle beds 11 and moves carriers of a yarn feeding system 14 with it. Namely, the racking device 12 moves the plural needle beds 11 relatively, the carriage 13 manipulates needles, and yarn is fed from the carriers to needles such that a knitted fabric is knitted. The yarn feeding system 14 comprises corns of yarn, top tension devices, a yarn transfer device sending the yarn out from the top tension devices, side tension devices that apply desired tension to the yarn, and so on. A take-down device 15 under the needle beds 11 takes down the knitted fabric. According to the embodiment, the take-down device 15 comprises at least a take-down roller and take-down claws taking down the knitted fabric, both not shown.

The controller 20 controls the flat knitting machine 2 and is inputted from an I/O 22 the driving data such as the knitting data and so on; the machine learning system 2 determines the feasibility of knitting, suitable knitting conditions, and so on. The controller 20 displays the feasibility of knitting, the suitable knitting conditions, and so on, determined by the machine learning system 2 on a display 23 or outputs them to a terminal of an operator through I/O 22. When plural knitting machines are present, it is not necessary to install the machine learning system 2 into all the controllers 20 in the knitting machines 10; it is enough to install the machine learning system 2 into controllers 20 of only some of the flat knitting machines.

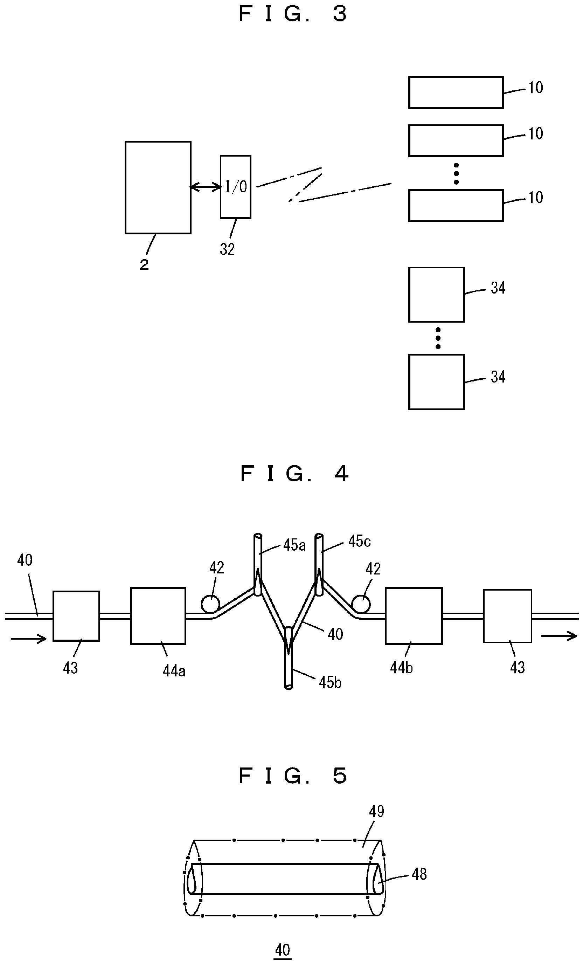

In Fig. 3, the machine learning system 2 is present alone and is independent of the knitting machine 10 or it is incorporated in a server not shown. The machine learning system 2 is connected, via I/O 32 and a network, to the flat knitting machines 10 or to design devices 34 regarding knitting designs, is inputted, from the flat knitting machines 10 or the design devices 34, the explanatory variables, and answers the feasibility of knitting, suitable knitting conditions, and so on. The machine learning system 2 may be incorporated within the design device 34.

The machine learning data 2 is inputted the knitting results, such as whether the knitting was successful, whether the knitting conditions were adequate, and so on, as the teacher data in response to its output. Thus, the machine learning system 2 further learns.

Figs. 4 to 6 describe how to measure the yarn property values. By the way, the measuring methods themselves are arbitrary, and items to be measured are also arbitrary. Fig. 4 indicates the measurement of frictional coefficient; both ends of yarn 40 are cramped by cramps 43, the tension applied to the yarn 40 is measured by tension sensors 44a, 44b at both sides of needles 45a to 45c. Further, for example, the right side ramp 43 is moved so that the tension is applied to the yarn 40. The needles 45a to 45c are, for example, the same to those used in knitting, and the frictional coefficient between the yarn 40 and the needles 45a to 45c is measured. In addition, indicated by 42 are rollers and they may be eyelets or the like. Here, due to the friction between the needles 45a to 45c and the yarn 40, difference is generated between the outputs of the tension sensors 44a, 44b. This is the same to the frictional force, and the frictional force divided by the tension measured by the tension sensor 44a is the frictional coefficient.

Fig. 5 indicates the measurement of yarn width; the yarn 40 consists generally of a core 48 and fluff 49. When imaging yarn 40 with shifting the focal point from the yarn 40, the fluff 49 vanishes, and the core 48 remains. The diameter of the core 48 is made the yarn width.

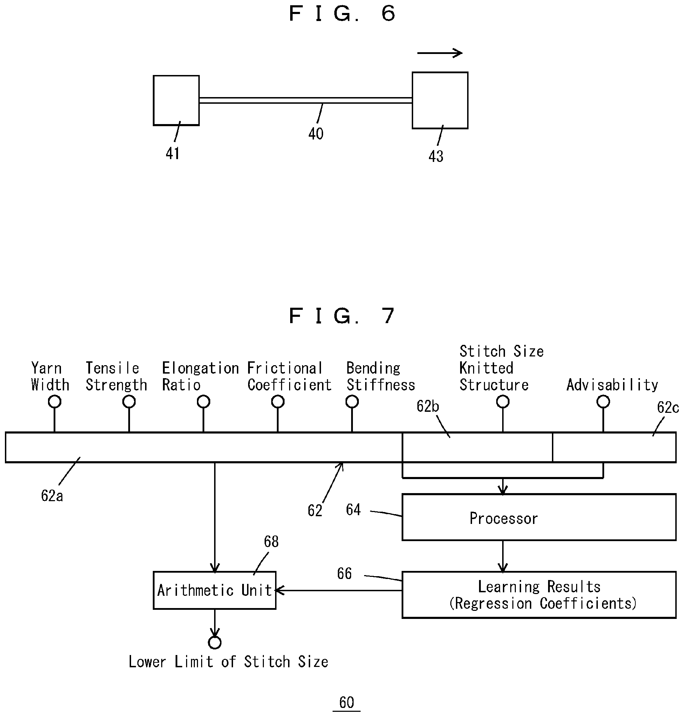

Fig. 6 indicates the measurement of the tensile strength and the elongation ratio of the yarn 40. While monitoring the tension applied to the yarn 40 by a load-cell 41, a cramp 43 is moved to the right side. And, the tension just before the yarn break is gotten from the load-cell 41, and the elongation ratio just before the yarn break is gotten from the movement distance of the cramp 43.

Figs. 7 to 9 schematically indicate individual machine learning devices. Here, Fig. 7 to 9 indicate functional blocks of the machine learning system, not their hardware. In Fig. 7, a multi-regression analyzer 60 is used to predict the lower limit of stitch size that can be feasibly knitted. The input portion 62 comprises an input portion 62a for yarn property values, an input portion 62b for stitch size and knitted structure (structure of knitted fabric according to the types of stitches and so on), and an input portion 62c for the objective variables (input portion for the teacher data). It is inputted from the input portion 62c whether feasible knitting was possible. A processor 64 calculates the regression coefficients of individual explanatory variables (yarn property values and knitted structure) to the objective variables (the feasibility of knitting), and the learned regression coefficients are stored in a memory 66.

With respect to a new type of yarn yet to be learned, its property values, knitted structure, and stitch size are inputted, an arithmetic unit 68 outputs the feasibility of knitting, the lower limit of stitch size that can be feasibly knitted, and so on, using the stored regression coefficients in the memory 66. Hence the range of stitch size that is feasibly knitted are predictable for each knitted structure, for example, without test-knitting. By the way, it is obvious that discrimination analysis is usable instead of the multi-regression analysis, and the types of machine learning systems are arbitrary.

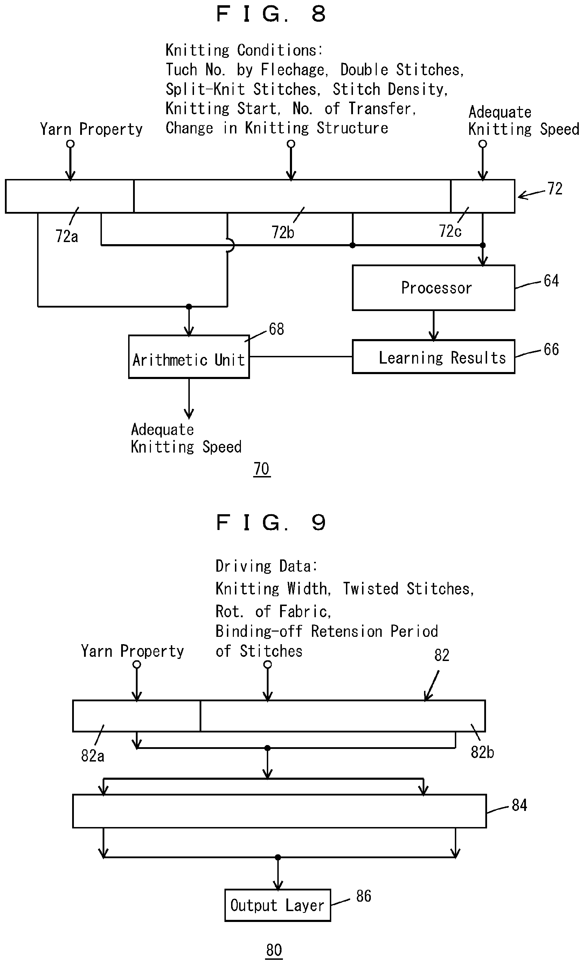

In Fig. 8, the suitable knitting speed is predicted by a multi-regression analyzer 70. The input portion 72 comprises an input portion 72a for yarn property values, an input portion 72b for knitting conditions, and an input portion 72c for the objective variables. As the yarn property values, the yarn width, the tensile strength when the yarn is broken, the elongation ratio till the yarn is broken, the frictional coefficient of yarn, and the wear resistance of yarn are inputted. However, the wear resistance can be explained by the tensile strength, the yarn width, and the frictional coefficient, and therefore, the four factors of the yarn width, the tensile strength when the yarn is broken, the elongation ratio, and the frictional coefficients may be inputted. According to the experiences of the inventors, the type of the yarn material is not correlated to the upper limit of knitting speed and is not needed to be included in the explanatory variables.

According to the experiences of the inventors, the meaningful driving data are two kinds of data comprising: factors related to knitting data defining the structure of a knitted fabric (pattern data); and factors related to the adjustment of knitting machines when knitting (adjustment data). The important data in the knitting data are the number of tuck stitches when flechage knitting is performed, the number of duplicated stitches during narrowing, the number of stitches increased by split-knitting, the number of stitch transfers, being carrying out binding-off, being carrying-out the care of yarn when the yarn is no further necessary, knitting start without waste-knitting, knitting start after knitting with a yarn to be drawn, crossing of stitches at the start position of a V-neck or binding-off, circulation of a knitted fabric, taking-off of a knitted fabric, a series of stitch transfers for a group of stitches, and so on. These factors make knitting of the knitted fabric difficult and therefore, require the reduction of knitting speed.

The factors related to the adjustment data are, for example, stitch densities, namely, stitch sizes, knitting of a hemline rib, carrier movement for changing yarn, change in knitted structure, knitting of a small width knitted fabric. When these factors are present, the quality of the knitted fabrics heavily depends upon the mechanism of knitting machines and adjustment of the knitting machines, and it is preferable to adjust the knitting speed according to these factors.

According to the experiences of the inventors, many of the above factors are correlated to yarn property values. Hence the threshold values to the number of tuck stitches, the number of duplicated stitches, the number of split-knitted stitches, the number of stitch transfers, and other factors for reducing or adjusting knitting speed can be determined according to the yarn property values by multi-regression analysis.

From input portion 72c, the teacher data such as that adequate knitting was performed, that the knitted fabric has disturbed portion, or that knitting was difficult are inputted. A processor 64 calculates the regression coefficients from the explanatory variables to the objective variables and stores them in a memory 66.

For example, when a new yarn is to be used for knitting fabrics, knitting data are inputted into the front-end processor 4, in addition to the yarn property values, and the necessary data for the input portion 72b are extracted. Then, an arithmetic unit 68 calculates (predicts) adequate knitting speed, for example, for each course, by multi-regression analysis. Then, knitted fabrics with desired quality are knitted efficiently.

Fig. 9 indicates the estimation of suitable take-down conditions by a neural net 80. The neural net 80 is provided with an input layer 82, an intermediate layer 84, and an output layer 86, and the intermediate layer 84 may consist of one layer or multilayers. Into an input layer 82a, the yarn property values are inputted, and according to the embodiment, the yarn width, the tensile strength, and the elongation ratio till rupture are inputted. Into an input layer 82b, the knitting width, the presence or absence of twisted stitches, the presence or absence of the circulation of the knitted fabrics, and the presence or absence of binding-off. In addition, the retention period of stitches (the course number retaining the stitches on the needle beds) are inputted. For example, the maximal retention period and the minimal retention period are inputted, but the average and the dispersion of the retention periods may be inputted. In the embodiment, since knitted fabrics with both knitted fabrics and rear knitted fabrics are considered, the retention periods are separately considered for the front knitted fabrics and for the rear knitted fabrics. According to the embodiment, the retention periods are inputted as the differences between those at one course prior, those at four courses prior, those at one course later, and those at four courses later. But the retention periods themselves between the four previous courses and the four later courses may be inputted. These data are extracted by the front-end processor 4 from the knitting data.

The teacher data are yarn property values, driving data of knitting machines, and set-up values for adequate take-down conditions. Among them, the yarn property values and the driving data are explanatory variables, and the set-up values for adequate take-down conditions are objective variables. The set-up values for adequate take-down conditions can be collected from the driving data of knitting machines when suitable knitted fabrics were really knitted. According to the embodiment, since the whole knitted fabric is almost uniformly taken down by the take-down roller and the take-down claws, the distribution of the retention periods over the entire knitted fabric is considered. However, when the take-down claws are separately controlled according to the positions along the knitting width, plural distributions of the retention periods along the positions in the knitting width direction are considered.

From the output layer 86, the rotation number of the take-down roller and the control data for the take-down claws are outputted for every course. As a result, adequate take-down conditions are calculated without substantial test-knitting.

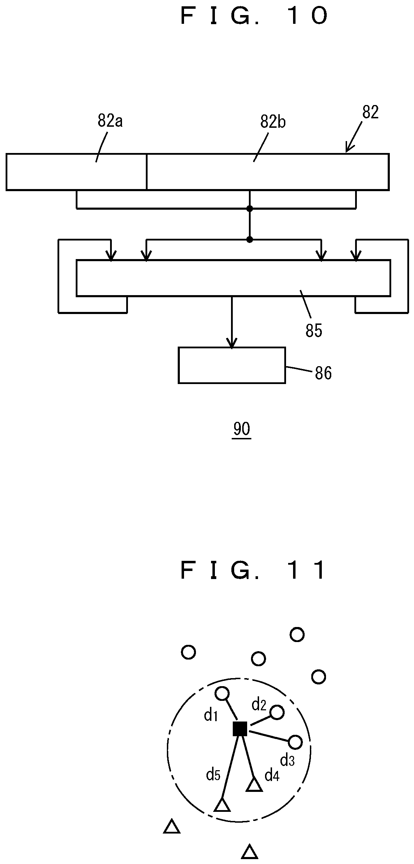

In machine learning, data processed in previous knitting courses, for example, the outputs from the intermediate layer, are sometimes necessary for processing subsequent courses. A modification corresponding to this is shown in Fig. 10; part of the output from an intermediate layer 85 is recursively inputted into the intermediate layer 85.

Fig. 11 indicates schematically machine learning according to the k-nearest neighbor algorithm. In the drawing, white circles and white triangles indicate two kinds of teacher data, such as knitting being feasible and knitting being difficult. Further, it is assumed that distances are defined between these data. For unknown data of black square, k is, for example, five, and five data in the neighborhood are extracted. In Fig. 3, three of them belong to the group of white circles, and the distances between them and the black square are small. Hence the black square is discriminated as a white circle according to a decision by the majority. When teacher data are adequately distributed over plural clusters, simple machine learning methods such as the k-nearest neighbor algorithm allow the discrimination of driving data between feasible data and non-feasible data.

Suitable tension to the yarn 40 by the yarn feeding system 14 and so on, can be predicted by the machine learning system 2. Whether the desired yarn appears on the surface of knitted fabrics by plating-knitting that uses two kinds of yarns can be discriminated by the machine learning system 2. Namely, items that can be learned according to yarn property values, the driving data of knitting machines, and knitting results can be dealt with the machine learning system 2.

### Description of Symbols

- 2: machine learning system
- 4: front-end processor
- 6: machine learning device
- 10: flat knitting machine
- 11: needle bed
- 12: racking device
- 13: carriage
- 14: yarn feeding system
- 15: take-down device
- 20: controller
- 22,32: I/O
- 23: display
- 34: design device
- 40: yarn
- 41: load-cell
- 42: roller
- 43: cramp
- 44: tension sensor
- 45: needle
- 48: core
- 49: fluff
- 60,70: multi-regression analyzer
- 62,72: input portion
- 64: processor
- 66: memory
- 68: arithmetic unit
- 80,90: neural net
- 82: input layer
- 84,85: intermediate layer
- 86: output layer

## Claims

1. A processing method of driving data of a knitting machine (10) using a trained machine learning device (6,60,70,80,90) that has explanatory variables comprising yarn property values and the driving data of the knitting machine (10), and objective variables comprising feasibility of knitting by the knitting machine or feasible knitting conditions, comprising:
a step for inputting the yarn property values and the driving data of the knitting machine (6,60,70,80,90) into the machine learning device as the explanatory variables; and
a step for outputting, from the machine learning device (6,60,70,80,90), the feasibility of knitting by the knitting machine or the feasible knitting conditions.

2. The processing method of driving data of a knitting machine using a trained machine learning device according to claim 1, being **characterized in that** the driving data of the knitting machine (10) are inputted into a front-end processor (4), that the front-end processor (4) transforms the inputted driving data of the knitting machine (10) to transformed driving data for the machine learning device (6,60,70,80,90), and that the front-end processor (4) inputs the transformed driving data into the machine learning device (6,60,70,80,90).

3. The processing method of driving data of a knitting machine using a trained machine learning device according to claim 1 or 2, being **characterized in that** the explanatory variables include the yarn property values at a temperature and a humidity in an environment where the knitting machine (10) is provided.

4. The processing method of driving data of a knitting machine using a trained machine learning device according to claim 3, being **characterized in that** the explanatory variables consist of the yarn property values at a temperature and a humidity in an environment where the knitting machine (10) is provided and the driving data of the knitting machine (10).

5. The processing method of driving data of a knitting machine using a trained machine learning device according to one of claims 1 to 4, being **characterized in that** the explanatory variables do not include the kind of the yarn material.

6. The processing method of driving data of a knitting machine using a trained machine learning device according to one of claims 1 to 5, being **characterized in that** plural kinds of objective variables are dealt with, that a plurality of machine learning devices (6,60,70,80,90) are used according to the kinds of the objective variables, and
that each machine learning device (6,60,70,80,90) outputs the feasibility of knitting by the knitting machine (10) or the feasible knitting conditions with respect to each objective variables.

7. The processing method of driving data of a knitting machine using a trained machine learning device according to one of claims 1 to 6, being **characterized in that** the yarn property values include at least yarn width, tensile strength when the yarn is ruptured, and elongation ratio when tension is applied to the yarn.

8. The processing method of driving data of a knitting machine using a trained machine learning device according to claim 7, being **characterized in that** the yarn property values include further the frictional coefficient of the yarn.

9. The processing method of driving data of a knitting machine using a trained machine learning device according to one of claims 1 to 8, being **characterized in that** results when a knitted fabric is knitted by the knitting machine (10) according to the feasibility of knitting by the knitting machine (10) or the feasible knitting conditions outputted from the machine learning device (6,60,70,80,90) are additionally learned by the machine learning device (6,60,70,80,90) .

10. The processing method of driving data of a knitting machine using a trained machine learning device according to one of claims 1 to 9, being **characterized in that** the objective variables include the lower limit of stitch size that can be feasibly knitted or the feasibility of knitting at a designated stitch size and
that the machine learning device (60) is configured to output an adequate range of stitch size or the feasibility of knitting at the designated stitch size, in accordance with the type of the stitches.

11. The processing method of driving data of a knitting machine using a trained machine learning device according to one of claims 1 to 10, being **characterized in that** the objective variables include suitable knitting speed or the feasibility of knitting at a designated knitting speed, for each knitting course.

12. The processing method of driving data of a knitting machine using a trained machine learning device according to one of claims 1 to 11, being **characterized in that** the objective variables include a suitable take-down condition or the feasibility of knitting at a designated take-down condition, for each knitting course.

13. A processing system of driving data of a knitting machine comprising a trained machine learning device (6,60,70,80,90) that has explanatory variables comprising yarn property values and the driving data of the knitting machine (10), and objective variables comprising feasibility of knitting by the knitting machine (10) or feasible knitting conditions,
wherein the machine learning device (6,60,70,80,90) is configured to output the feasibility of knitting by the knitting machine (10) or the feasible knitting conditions, in response to input of the yarn property values and the driving data of the knitting machine (10) .
